# EUROPÄISCHE PATENTSCHRIFT

(11) **EP 0 442 052 B1**
(45) Veröffentlichungstag und Bekanntmachung des Hinweises auf die Patenterteilung: **07.07.1993**
(21) Anmeldenummer: 90122522.7
(22) Anmeldetag: 26.11.1990
(51) Int. Cl.: F16D 69/04, F16D 65/02

(54) **Reibbelag für Scheibenbremsen, insbesondere für Strassenfahrzeuge und Schienenfahrzeuge**
Disc brakes friction lining, especially for road vehicles and railway vehicles
Garniture de friction pour freins à disque, spécialement pour véhicules routiers et véhicules ferroviaires

(30) Priorität: 14.02.1990 DE 9001709 U
(43) Veröffentlichungstag der Anmeldung: 21.08.1991
(73) Patentinhaber: AlliedSignal Bremsbelag GmbH, 21509 Glinde (DE)
(72) Erfinder: Valentin, Wolfgang Dipl.-Ing., W-2056 Glinde (DE)
(74) Vertreter: Richter, Werdermann & Gerbaulet

(56) Entgegenhaltungen:
- EP-A- 0 056 918
- EP-A- 0 084 591
- EP-A- 0 100 888
- EP-A- 0 254 827
- EP-A- 0 396 493
- BE-A- 515 600
- DE-A- 2 928 572
- FR-E- 71 896
- PATENT ABSTRACTS OF JAPAN, Band 9, Nr. 164 (M-395)[1887], 10. Juli 1985;& JP-A-60 37 431 (NISSHIN BOSEKI K.K.) 26-02-1985

## Beschreibung

Die Erfindung geht aus von einem Reibbelag für Scheibenbremsen, insbesondere für Straßenfahrzeuge und Schienenfahrzeuge, der ein- oder mehrteilig ausgebildet ist und aus einem auf einer Trägerplatte bzw. Trägerblech befestigten Block aus einem gepreßten Reibwerkstoff besteht, wobei die Trägerplatte auf der den Reibwerkstoffblock tragenden Seite ein aufgesintertes Halterungsbett aus einzelnen, mit dem Reibwerkstoffblock kraft- und formschlußbildenden Formkörpern mit Hinterschneidungen, Einziehungen od.dgl. aufweist, und auf dem Halterungsbett der aufgepreßte Reibwerkstoff in Blockform unter Ausfüllung der Hinterschneidungen, Einziehungen od.dgl. der einzelnen Formkörper befestigt ist.

Ein Bremsbelag dieser Art ist aus der EP-A- 0 084 591 bekannt.

Derartige Reibbeläge, die sich in ihrem praktischen Einsatz bereits seit langem bewährt haben, erfordern oftmals noch die Verwendung einer Zwischenschicht zwischen dem Halterungsbett und dem Reibmaterialblock. Diese Zwischenschicht wurde bisher als Binderfolie oder als Kleber ausgebildet, sie ist jedoch mit verschiedenen Nachteilen verbunden, so daß es wünschenswert ist, eine Möglichkeit zu schaffen, daß auf diese Zwischenschicht verzichtet werden kann. Weiterhin hat es sich gezeigt, daß zwischen den bekannten Halterungsbetten und der Trägerplatte bzw. zwischen dem Halterungsbett und dem Reibwerkstoffblock Rißbildungen und/ oder Korrosion auftreten kann, so daß eine Unterrostung des Reibmaterialblockes kriechend von der Seite auftreten kann, die zu einer Beeinträchtigung der Bremswirkung und - im Extremfall - zu einem Ausfall des Bremsbelages führen könnte.

Das Verkleben des Reibmaterials mit dem Trägerblech erfordert bei der Bremsbelagherstellung durch die Wärmebehandlung des Klebemittels relativ lange Standzeiten, was zu einer geringen Fertigungszahl führt. Diese Standzeiten sind erforderlich, um eine gute Verklebung des Reibmaterials mit dem Trägerblech zu erreichen. Werden die Standzeiten verkürzt, dann werden schlechte Haftverbindungen erhalten, da kein vollständiger Wärmedurchgang durch das Klebemittel erreicht wird. Hinzu kommt, daß bei der Verwendung von Klebemitteln das Trägerblech vorbehandelt sein muß. Entweder muß es eine polierte Haftungsfläche oder einen Rauhgrund aufweisen, auf die dann das Klebemittel aufgebracht wird. Des weiteren ist es bekannt, nach dem Aufpressen des Reibmaterials auf das Trägerblech dieses bis in den Seitenbereich des Reibmaterialblockes mit einer Lackschicht zu versehen. Bei dieser Verfahrensmaßnahme müssen besondere Vorkehrungen zum Schutz für den Lackierer oder die Bedienungsperson der Lacksprühvorrichtung getroffen werden, doch die durch den Aufsprühvorgang anfallenden Mengen an nicht mehr verwendbaren Lackresten sind erheblich und stellen ein Entsorgungsproblem dar. Außerdem werden hohe Anforderungen an die anzubringenden Lackschichten gestellt. Alle diese Verfahrensmaßnahmen führen jedoch zu keinem ausreichenden Korrosionsschutz für das aus Eisen oder Stahl bestehende Trägerblech. Auch Versuche, den Korrosionsschutz durch vorangehendes Verzinken des Trägerbleches zu verbessern, schlugen insofern fehl, als ein galvanischer Metallüberzug auf einem glatten Trägerblech keinen ausreichenden Haftgrund für ein Klebemittel darstellt; das Klebemittel haftet nicht auf einem z.B. verzinkten Blech.

Der JP-A- 60 37 431 ist die Lehre zu entnehmen, einen Träger vor dem Aufbringen des Reibwerkstoffblockes mit einem filmartigen Überzug zu versehen, der aus flockigem Zink und einem Chrom-Polymer besteht. Auch wenn auf durch die Anbringung eines überzuges die Trägerplatte korrosionsgeschützt ist, so ist kein ausreichender Halt des Reibwerkstoffblockes auf dem eine glatte Oberfläche aufweisenden überzug gegeben, da als Binder zwischen dem überzug und dem Reibwerkstoffblock Klebstoffe verwendet werden, die oftmals den im Betrieb der Scheibenbremsen auftretenden Temperaturen nicht gerecht werden. Und nur allein das Aufbringen eines überzuges auf die Oberfläche eines plattenförmigen Trägers, auch wenn die Trägeroberfläche mit einem Rauhgrund versehen sein sollte, löst nicht das Problem einer ausreichenden Haftung zwischen dem Reibwerkstoffblock und dem Träger, da durch das Aufbringen des überzuges die Wirkung des Rauhgrundes verloren geht, zumindest jedoch gemindert wird.

Die Erfindung löst daher die Aufgabe, einen Reibbelag der eingangs genannten Art zu schaffen, bei dem trotz der Anbringung eines galvanischen Metallüberzugs oder eines anderen geeigneten überzugs auf der Trägerplatte (Trägerblech) eine ausreichende Haftung zwischen dem Reibmaterial und dem Trägerblech bei gleichzeitiger Verbesserung des Korrosionsschutzes für die Trägerplatte erreicht wird. Des weiteren soll erreicht werden, daß die Trägerplatte eine geringere Rißanfälligkeit aufweist, wobei gleichzeitig die Geräuschdämpfung beibehalten bzw. verbessert werden soll.

Diese Aufgabe wird durch die in den Patentansprüchen 1 und 2 gekennzeichneten Merkmale gelöst.

Überraschend wurde aufgefunden, daß die sich durch das Aufbringen von Lackschichten ergebenden Nachteile vermieden werden, wenn vor dem Aufpressen des Reibmaterials auf die Trägerplatte auf den Rauhgrund der Trägerplatte ein galvanischer Metallüberzug aufgebracht wird, der aus Kupfer, Silber, Zinn, Cadmium, Zink, Chrom oder einem anderen geeigneten Material besteht, wobei auch ein überzug aus einem hochtemperaturbeständigen Kunststoff, wie z.B. Trifluoräthylen, Polytetrafluoräthylen, Polysiloxane, Silikonkautschuk, angebracht sein kann. Das Zusammenwirken-von Rauhgrund (Halterungsbett) und galvanischem überzug führt zu einem hohen Korrosionsschutz für die Trägerplatte, während der Rauhgrund die Haftung zwischen dem Reibmaterial und dem Trägerblech bewirkt, da der galvanische Überzug dem Konturenverlauf des Rauhgrundes folgt. Auf diese Weise ist ein umweltfreundliches Verfahren zur Herstellung von Reibbelägen geschaffen. Hinzu kommt, daß das Herstellungsverfahren für Reibbeläge verbessert und vereinfacht wird. Lange Standzeiten bei der Bandproduktion von Reibbelägen, bedingt durch die Aushärtzeiten für den Kleber oder durch die Trocknungszeit der Lackschichten, entfallen.

Des weiteren wird vorgeschlagen, bei einem Reibbelag der eingangs genannten Art vorzusehen, daß das Halterungsbett aus einem Materialgemisch aus einem Anteil (A) mit niedrigerem Schmelzpunkt und einem Anteil (B) mit einem höheren Schmelzpunkt besteht.

Durch die Verwendung dieses Gemisches für die Ausbildung des Halterungsbettes in Form einer Struktur - aus kraft- und formschlußbildenden aus dem Gemisch geformten Formelementen, die Hinterschneidungen, Einziehungen u.dgl. aufweisen, ist es möglich, daß die Strukturoberfläche eine völlig bizarre und unregelmäßige Struktur aufweist, und zwar sowohl in der Makrostruktur als auch in der Mikrostruktur bezüglich der einzelnen aufgesinterten Teilchen, so daß jeder einzelne aufgesinterte Formkörper gegenüber der bereits bekannten Kugeloberfläche eine größere Oberfläche aufweist, ohne jedoch eine Kugelgestalt zu besitzen. Hierdurch wird eine sehr hohe mechanische Festigkeit und eine hohe Temperaturbeständigkeit erreicht, was zu einer hohen Haftfähigkeit und Haftungssicherheit des Reibmaterialblocks an der Trägerplatte führt.

Gemäß vorteilhafter Ausführungen ist dabei vorgesehen, daß der niedrig schmelzende Anteil (A) ein niedrig schmelzendes Metall wie Zinn, Weich- oder Schnellot od.dgl. oder eine niedrig schmelzende Legierung wie Bronze, Messing od. dgl. ist und daß der höher schmelzende Anteil (B) aus Eisen, Sand, Keramikpulver od.dgl. besteht, wobei der Schmelzpunkt des höher schmelzenden Anteils (B) unter dem Schmelzpunkt des Trägerblechs liegen sollte. Die Trägerplatte besteht aus Stahl, V2A-Stahl, Keramik, Aluminium oder anderen geeigneten Werkstoffen. Während der Anteil (A) niedrig schmelzend ist, müssen die Schmelzpunkte von Anteil (B) und auch vom Material des Trägerbleches hoch sein; sie können unterschiedlich oder auch gleich sein.

Trotz des galvanischen Metallüberzugs ist ein direkter Kraft- und Wärmeübergang von dem Reibwerkstoffblock auf das aufgesinterte Materialbett und damit auf die Träger platte möglich. Eine zusätzliche Verbindungsschicht entfällt. Insbesondere durch die Verwendung von Bronze wird zusätzlich eine Unterrostung und Anrostung vermieden, so daß die Dauerhaltbarkeit vergrößert und die Korrosionsanfälligkeit auch unter extremen Umweltbedingungen verringert wird.

Hinzu kommt, daß ein solcher Reibbelag durch die Verwendung des Kombinationswerkstoffes optimale Notlaufeigenschaften im Bereich des aufgesinterten Halterungsbettes aufweist. Durch die bizarre Oberflächenstuktur im Bremsscheibenberührungsbereich ist immer ein Mischmaterial aus Reibwerkstoffmaterial und aufgesintertem Material mit der Bremsscheibe in Berührung, so daß noch eine Bremsung mit dem Rest Reibwerkstoffmaterialanteil durchgeführt werden kann. Gleichzeitig ist ein Bremsscheibenschutz gegeben, da durch den verwendeten Kombinationswerkstoff eine Zerstörung der Bremsscheibe vermieden werden kann. Es ist daher durch diese Struktur eine hohe Haftung und Reibung bis zum Schluß gegeben, so daß Notlaufeigenschaften gegeben sind. Ein Abscheren des Restbelages ist durch die gegebene Verzahnung zwischen der bizarren Struktur der Strukturoberfläche mit dem Reibwerkstoffblock nicht möglich, wobei noch zusätzlich die Sicherheit dadurch erhöht ist, daß eine Unterrostung sicher verhinderbar ist.

Ein derartiger Reibbelag kann auch ohne Durchgangslöcher (Durchbrechungen) in der Trägerplatte, die bisher für eine mögliche Kontrolle vorgesehen wurden, verwendet werden, da eine Sicherheit bis zuletzt gegeben ist. Die dadurch erreichte höhere Steifigkeit gestattet bei gleicher Festigkeit eine Verdünnung der Trägerplatte, was zu einer Gewichtsabsenkung und -verringerung führt.

Weiterhin hat es sich gezeigt, daß die verwendete Strukturoberfläche noch zusätzlich den Vorteil hat, daß sich zwischen dem Reibmaterialblock und dem aufgesinterten Halterungsblech bei weitgehender Ausfüllung der Hinterschneidungen und Einziehungen durch den Reibwerkstoff kleine Lufteinschlüsse ergeben, die den Materialien die Möglichkeit geben, sich in die sich so ergebenden Kavernen hinein auszudehnen, so daß auftretende Wärmespannungen verringert werden. Hierdurch ergibt sich eine zusätzliche Schonung des Reibbelages und eine Verbesserung der Dauerhaltbarkeit.

Gemäß einer bevorzugten Ausführungsform ist vorgesehen, daß der niedrig schmelzende Anteil (A) aus etwa 30 % Bronze und der höher schmelzende Anteil (B) aus etwa 70 % Fe-Pulver besteht, wobei die verwendete Bronze einen Anteil von 10 % Zinn aufweisen sollte. Bei Verwendung eines derartigen Gemisches ergibt sich hinsichtlich aller gewünschten Eigenschaften wie Verschleißfestigkeit, Geräuschdämpfung und Korrosionsschutz ein optimales Ergebnis.

Bevorzugterweise ist vorgesehen, daß das aufgesinterte Halterungsbett aus einer das Trägerblech im Bereich der Reibmaterialaufnahmefläche vollflächig oder teilflächig überdeckenden Grundschicht aus einzelnen, kraft- und formschlußbildenden Formelementen, die Hinterschneidungen, Einziehungen od.dgl. aufweisen, besteht. Dabei können die Greifelemente als zylindrische Säulen, kegelstumpfförmige Säulen, als echter Kegelstumpf oder auch in Form einer Pyramide mit einer dreieckigen, viereckigen oder mehreckigen Grundfläche ausgebildet sein, wobei die einzelnen Greifelemente jeweils in einem Abstand zueinander angeordnet sind. Die Auswahl der Art der verwendeten Greifelemente hängt von den gewünschten Eigenschaften des Reibbelages ab. Während eine säulenartige Ausbildung der Greifelemente dazu führt, daß der Anteil zwischen Halterungsbettmaterial und Reibwerkstoffmaterial in der Berührungsfläche auch bei zunehmendem Verschleiß relativ konstant bleibt, steigt bei der Verwendung anderer Greifelementformen der Anteil des Halterungsmaterials, so daß hier ein abnehmender Verschleiß erzielt werden kann, so daß auch bei einer starken Belastung des Reibbelages zwischen zwei überprüfungen die Bremseigenschaften erhalten bleiben.

Zur Herstellung eines derartigen Reibmaterials ist ein Verfahren vorgesehen, bei dem vor dem Aufpressen des Reibwerkstoffes auf das Trägerblech mit dem gesinterten Halterungsbett auf dieses als Korrosionsschutz für das Trägerblech auf galvanischem Wege erzeugter metallischer Überzug aus Kupfer, Silber, Zinn, Cadmium, Zink, Chrom oder einem anderen geeigneten Metall oder ein Überzug aus einem hochtemperaturbeständigen Kunstoff aufgebracht wird.

Ein weiteres Verfahren besteht darin, daß unter Verwendung eines an sich bekannten Trägerblechs durch Aufsinterung eines geeigneten Werkstoffs ein Halterungsbett ausgebildet wird, wobei vorgesehen ist, daß ein pulverförmiges Gemisch aus einem Anteil (A) mit niedrigerem Schmelzpunkt und einem Anteil (B) mit höherem Schmelzpunkt erstellt wird und das Pulver über ein Sieb oder über ein Lochblech gestrichen wird, das auf dem Trägerblech aufliegt, dann das Sieb abgehoben wird, so daß Pulverhäufchen des Gemisches dann auf dem Trägerblech verbleiben und anschließend die Sinterung vorgenommen wird oder das Pulver in einer Graphitform mit einer Anzahl von Sacklochbohrungen, die sich konisch zur Sacklochöffnung erweitern, eingebracht wird, dann das Trägerblech auf die die Sacklochöffnungen aufweisende Seite der Graphitform aufgelegt wird und anschließend die Sinterung vorgenommen wird, oder das Pulver auf eine Formplatte aufgebracht wird, in die eine Anzahl von Nuten mit vorzugsweise dreieckförmigem Querschnitt eingelassen sind, wobei die Nuten in Quer- und Längsrichtung verlaufen und sich kreuzen, so daß das Gemischpulver auf das Trägerblech durch Aufstreichen im Wabenraster aufbringbar ist, dann das Trägerblech auf die die Nuten tragende Seite der Formplatte aufgelegt wird und anschließend die Sinterung vorgenommen wird.

Mit diesem Herstellungsverfahren wird folgendes erreicht:
a) eine bizarre Struktur der aufgesinterten Teilchen, wobei jeder Sinterkörper gegenüber einer Kugeloberfläche eine größere Oberfläche aufweist, ohne jedoch Kugelgestalt zu besitzen,
b) eine hohe mechanische Festigkeit und Temperaturbeständigkeit,
c) eine hohe Haftfähigkeit,
d) gute Notlaufeigenschaften durch Verwendung eines Haftbettes mit Notlaufeigenschaften, und
e) geringere Rißbildung durch Verwendung von nur wenigen Schichten.

Anstelle der vorgeschlagenen Graphitform mit den Sacklöchern kann auch eine Form aus einem anderen geeigneten Werkstoff mit guten Gleiteigenschaften verwendet werden. Die einzelnen Sacklöcher erweitern sich konisch zur Sacklochöffnung. Es können auch Formen mit Durchbohrungen verwendet werden, die dann einseitig verschlossen werden, und zwar vermittels einer entsprechende Stifte tragenden Platte, deren Stifte in die Durchbohrung eingreifen. Die Dosierung der Pulvermenge in jeder Durchbohrung erfolgt in dem Maße, in dem die Stifte in bezug auf ihre Längen in die Durchbohrungen eingeschoben werden. Dadurch ist eine genaue Dosierung und Ausbildung der Greifelemente möglich. Die optimalen Materialeigenschaften werden dabei durch das Zusammenwirken der vorgesehenen Mischung mit einer entsprechenden Temperaturbehandlung im Rahmen des Sintervorgangs erreicht, da die bizarre Struktur durch die unterschiedlichen Schmelzpunkte im Zusammenwirken mit der Temperatur und Druckbehandlung entsteht.

Um dem Halterungsbett Reibmaterialeigenschaften zu verleihen, kann vorgesehen sein, daß das Halterungsbett neben dem Anteil (A) und dem Anteil (B) einen Anteil (C) aus Kohlenstoff aufweist. Durch den Kohlenstoffanteil wird dabei der Reibwert eingestellt.

Weitere vorteilhafte Ausgestaltungen und Weiterbildungen der Erfindung sind in den Unteransprüchen gekennzeichnet.

Ausführungsbeispiele der Erfindung werden nachstehend anhand der Zeichnung näher erläutert. Es zeigen
Fig. 1 in einer Ansicht von oben ein Trägerblech mit darauf aufgebrachtem Halterungsbett,
Fig. 2 einen senkrechten Schnitt gemäß Linie II-II in Fig. 1,
Fig. 3 einen vergrößerten senkrechten Schnitt durch ein Trägerblech mit einem aufgebrachten Halterungsbett in Form von kugelförmigen Formkörpern,
Fig. 4 in einer Ansicht von oben ein Trägerblech mit einer weiteren Ausführungsform des aufgebrachten Halterungsbettes,
Fig. 5 einen senkrechten Schnitt gemäß Linie V-V in Fig. 4,
Fig. 6 in einer Schnittdarstellung entsprechend Fig. 5 eine weitere Ausführungsform des aufgebrachten Halterungsbettes,
Fig. 7 in einer photographischen Darstellung ein mikroskopisch vergrößertes Schnittbild durch eine Trägerplatte mit Halterungsbett gemäß Fig. 6,
Fig. 8 in einer Draufsicht die Trägerplatte gemäß Fig. 7,
Fig. 9 in photographischer Darstellung ein mikroskopisch vergrößertes Schnittbild durch eine weitere Ausführungsform einer Trägerplatte mit gitterförmig aufgebrachtem Halterungsbett,
Fig. 10 in einer Draufsicht die Trägerplatte gemäß Fig. 9,
Fig. 11 in photographischer Darstellung ein mikroskopisch vergrößertes Schnittbild durch eine weitere Ausführungsform einer Trägerplatte mit halbelliptischen Greifelementen und
Fig. 12 in einer Draufsicht die Trägerplatte gemäß Fig. 11.

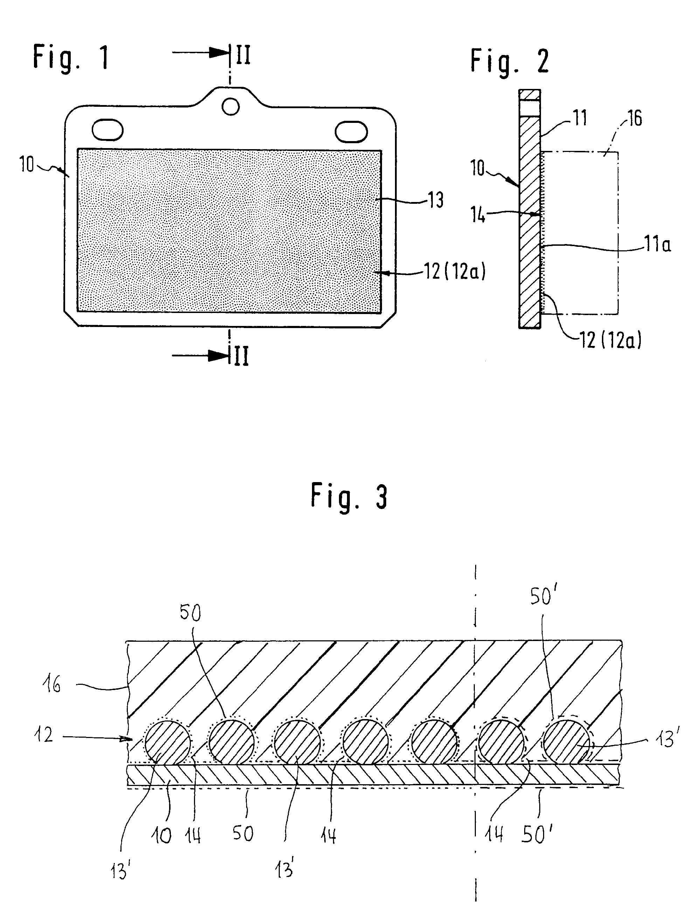

In Fig. 1-5 ist mit 10 eine in an sich bekannter Weise ausgebildete Trägerplatte bzw. Trägerblech aus metallischen oder anderen geeigneten Werkstoffen bezeichnet, auf dem ein nur angedeuteter Block 16 aus einer gepreßten Reibmaterialmischung angeordnet ist. Bei der Ausführungsform gemäß Fig. 1 und 2 weist das Trägerblech 10 auf der den Reibwerkstoff 16 tragenden Seite 11 ein Halterungsbett 12 als strukturell ausgebildete Oberfläche auf, die aus einer Grundschicht 12a von Formelementen 13 besteht, die aus der Materialmischung aus dem höher schmelzenden Anteil und dem niedriger schmelzenden Anteil derart gemischt, komprimiert und temperaturbehandelt sind, daß jedes einzelne Formelement 13 Hinterschneidungen, Einziehungen u.dgl. 14 aufweist.

Bei dem in Fig. 3 gezeigten Ausführungsbeispiel besteht das Halterungsbett 12 aus auf das Trägerblech 10 aufgesinterten kugelförmigen Formkörpern 13', die im Befestigungsbereich Hinterschneidungen 14 bilden. Auf das Halterungsbett 12 ist ein galvanischer überzug 50 aus Metall aufgebracht, der die einzelnen Formkörper 13' umgibt und der den von den Formkörpern 13' gebildeten Konturen angepaßt ist, wobei der Überzug 50 auch dem Verlauf der Hinterschneidungen, Einziehungen od.dgl. 14 folgt, so daß ein geschlossener metallischer Überzug erhalten wird; dadurch wird ein guter Korrosionsschutz für das Trägerblech 10 geschaffen. Der metallische Überzug 50 kann aus Kupfer, Silber, Zinn, Cadmium, Zink oder einem anderen geeigneten Metall bestehen. Der weitere Vorteil, den der galvanische Metallüberzug erbringt, liegt in einer genauen Maßhaltigkeit in bezug auf die Dicke des überzuges. Diese Maßhaltigkeit ist weder bei überzügen aus einem Lack noch bei einer Pulverbeschichtung möglich. Hinzu kommt, daß der metallische überzug in einer Gleichmäßigkeit auftragbar ist, die mit anderen Beschichtungsverfahren nicht erreichbar ist. Außerdem bleiben die Konturen des Halterungsbettes 12 voll erhalten, so daß trotz des metallischen überzugs 50 zwischen dem aufgepreßten Reibwerkstoff und dem Rauhgrund ein hoher Kraft- und Formschluß besteht.

Neben einem überzug 50 aus metallischen Werkstoffen kann auch als überzug ein die gleichen Eigenschaften aufweisender Kunststoff verwendet werden. Ein derartiger Überzug ist in Fig. 3 bei 50' angedeutet. Als Kunststoffe eignen sich insbesondere solche, die auch bei höheren Temperaturen beständig sind, so u.a. Silikonkautschuk, Trifluoräthylen, Polytetrafluoräthylen, Polysiloxane u.dgl.

Die Reibmaterialmischung wird unter Zuhilfenahme eines entsprechenden Formelementes auf das mit dem Halterungsbett 12 versehene Trägerblech 10 derart aufgepreßt, daß während des Preßvorganges die Reibmaterialmischung in die Zwischenräume zwischen die einzelnen Formelemente 13 (deren bizarre Oberfläche in Detail C angedeutet ist) und in diejenigen Räume einfließt, die von Hinterschneidungen, Einziehungen u.dgl. 14 gebildet sind. Auf diese Weise erfolgt vermittels der Formelemente 13 eine innige Verbindung zwischen dem sich verformenden Reibwerkstoffblock 16 und dem Halterungsbett 12, die sich ineinander verkrallen. Durch die Materialeigenschaften erfolgt jedoch auch eine derartige Verformung des Halterungsbettes 12 und von deren Grundschicht 12a so, daß der Reibwerkstoff die nicht vom Halterungsbett ausgefüllten Oberflächenteile der Reibmaterialaufnahmefläche 11a beaufschlagt, so daß eine vollflächige Ausfüllung der Reibmaterialaufnahmefläche 11a erfolgt, so daß sich hier keine oder nur eine sehr geringe Anzahl von Freiflächen und Freiräumen ergibt, wodurch ein Eindringen von Feuchtigkeit und die damit verbundenen Korrosionsmöglichkeiten vermieden werden.

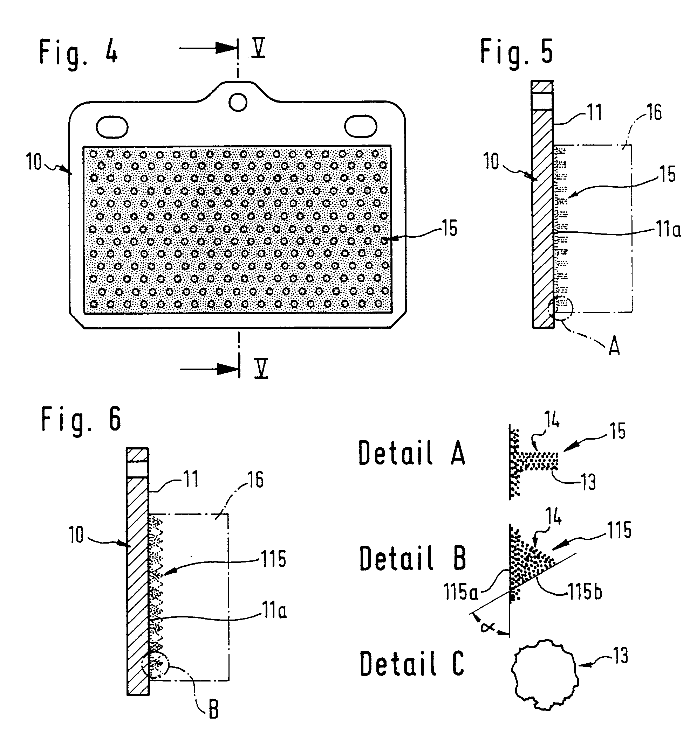

Eine weitere Ausführungsform ist in den Fig. 4 und 5 dargestellt, bei der der Grundaufbau dem der Fig. 1 und 2 entspricht, und auf der Grundschicht 12a Greifelemente 15 in Form zylindrischer oder kegelstumpfförmiger Säulen oder als Kegelstumpf ausgebildet sind, wie im Detail A angedeutet ist. Hierbei ergeben sich die Greifelemente 15 in einer Makrobetrachtung als Säulen, während sich bei einer anhand der nachfolgenden Figuren noch näher dargestellten Vergrößerung zeigt, daß die Greifelemente 15 in sich als bizarre Strukturen mit Hinterschneidungen, Einziehungen u.dgl. 14 ausgebildet sind.

In Fig. 6 ist eine weitere Ausführungsform dargestellt, bei der in Abweichung zu Fig. 5 die Greifelemente 115 als Pyramiden mit einer dreieckigen, viereckigen oder mehreckigen Grundfläche ausgebildet sind. Um hier optimale Halterungs- und Verschleißeigenschaften zu erhalten, ist dabei vorgesehen, daß der Pyramidenwinkel α zwischen der Pyramidengrundfläche 115a und der Pyramidenseite 115b etwa 60 Grad beträgt, wie in Detail B angedeutet ist.

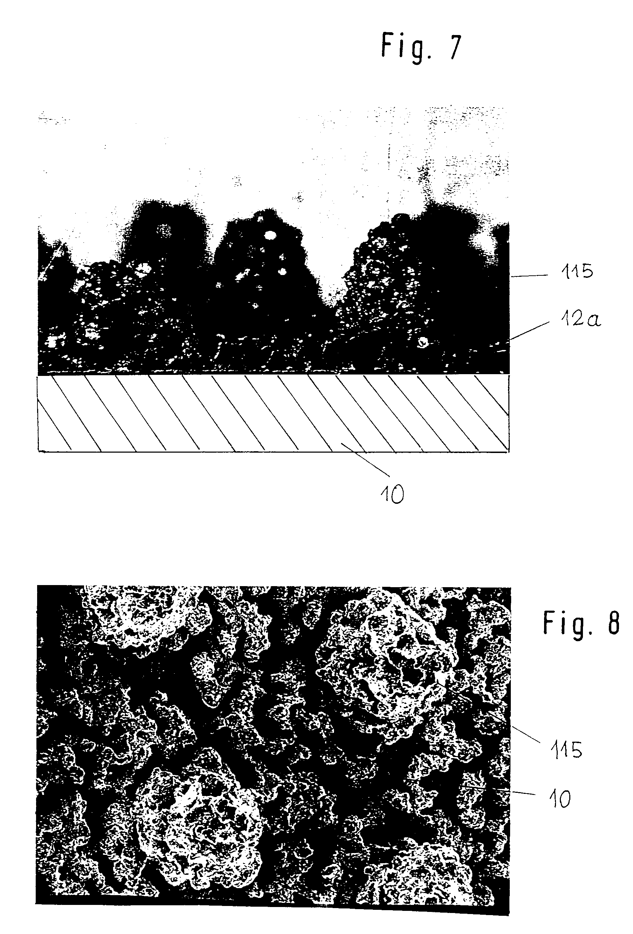

In den Fig. 7 und 8 ist in einer mit einem Elektronenmikroskop erstellten Ausschnittsvergrößerung dargestellt, wie sich die bizarre Struktur der Grundschicht 12a und der Greifelemente 115 aufgrund der Materialeigenschaften nach der Sinterung als Halterungsbett tatsächlich ergibt.

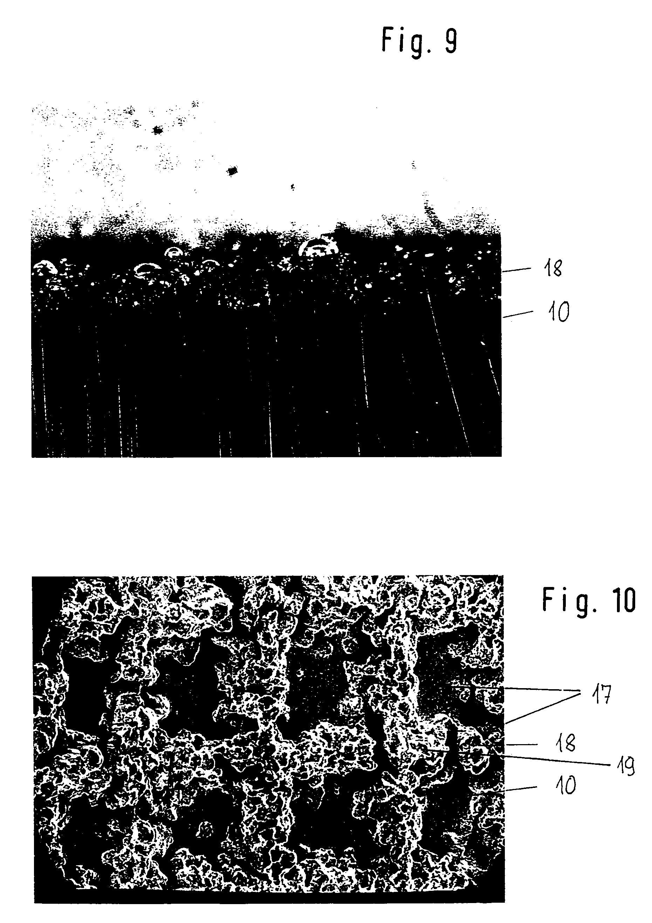

In Fig. 9 und 10 ist dabei eine weitere Ausführungsform dargestellt, bei der das aufgesinterte Halterungsbett als gitterförmig angeordnete Reihen 17 aus Formelementen besteht, wobei die einzelnen Greifelementabschnitte 18 sich an Kreuzungspunkten 19 überlagern und dort zusätzliche Greifelementeinheiten bilden.

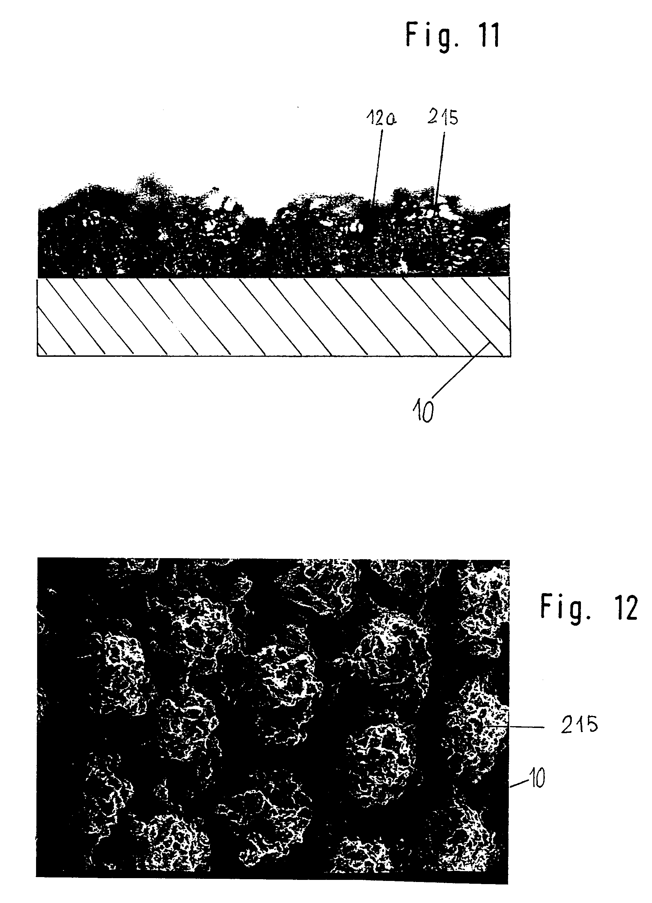

In den Fig. 11 und 12 ist ebenfalls in mikroskopisch vergrößerter Darstellung die Ausgestaltung eines Halterungsbettes dargestellt, wie sie sich etwa bei einer Ausführungsform gemäß Fig. 1 und 2 ergibt, wobei sich auf der Grundschicht Greifelemente mit etwa halbkugelförmiger oder halbelliptischer Grundform ausbilden.

Die in den Fig. 7 bis 12 dargestellten tatsächlichen Ausführungsformen sind lediglich als Ausführungsbeispiele anzusehen, da sich unter Anwendung der erfindungsgemässen Mischung der Materialanteile für das Halterungsbett und/oder unter Verwendung des erfindungsgemäßen Verfahrens beliebige Strukturoberflächen mit den gewünschten Eigenschaften ausbilden lassen.

Das Aufbringen des metallischen Überzugs kann auf galvanischem oder thermischen Wege oder durch Aufdampfen erfolgen. Es besteht auch die Möglichkeit, vor dem Aufrauhungsprozeß bzw. vor dem Aufbringen des Halterungsbettes die Trägerplatte mit einem metallischen Überzug, z.B. aus Kupfer, zu versehen. Aus dem metallischen überzug wird dann der Rauhgrund herausgearbeitet.

Besteht die Trägerplatte 10 aus einem dünnen Blech, dann ist dieses mit einem Profil, z.B. verrippt, versehen, so daß die Eigensteifigkeit der Trägerplatte 10 erhöht wird.

## Patentansprüche

1. Reibbelag für Scheibenbremsen, insbesondere für Straßenfahrzeuge und Schienenfahrzeuge, der ein- oder mehrteilig ausgebildet ist und aus einem auf einer Trägerplatte (10) bzw. Trägerblech befestigten Block (16) aus einem gepreßten Reibwerkstoff besteht, wobei die Trägerplatte auf der den Reibwerkstoffblock (16) tragenden Seite ein aufgesintertes Halterungsbett (12) aus einzelnen mit dem Reibwerkstoffblock kraft- und formschlußbildenden Formkörpern (13) mit Hinterschneidungen, Einziehungen od.dgl. (14) als Rauhgrund aufweist, und auf dem Halterungsbett (12) der aufgepreßte Reibwerkstoff in Blockform unter Ausfüllung der Hinterschneidungen, Einziehungen od.dgl. (14) der einzelnen Formkörper (13) befestigt ist,
dadurch gekennzeichnet,
daß zwischen dem Reibwerkstoffblock (16) und dem Halterungsbett (12) der Trägerplatte (10) auf diesem ein metallischer, galvanischer dem Konturenverlauf des Rauhgrundes des Halterungsbettes (12) folgender überzug (50) als Korrosionsschutz für die Trägerplatte (10) aufgebracht ist, wobei der metallische überzug (50) aus Kuper, Silber, Zinn, Cadmium, Zink, Chrom oder einem anderen geeigneten Metall besteht.

2. Reibbelag für Scheibenbremsen, insbesondere für Straßenfahrzeuge und Schienenfahrzeuge, der ein- oder mehrteilig ausgebildet ist und aus einem auf der Trägerplatte (10) bzw. Trägerblech befestigten Block (16) aus einem gepreßten Reibwerkstoff besteht, wobei die Trägerplatte auf der den Reibwerkstoffblock (16) tragenden Seite ein aufgesintertes Halterungsbett (12) aus einzelnen mit dem Reibwerkstoffblock kraft- und formschlußbildenden Formkörpern (13) mit Hinterschneidungen, Einziehungen od.dgl. (14) als Rauhgrund aufweist, und auf dem Halterungsbett (12) der aufgepreßte Reibwerkstoff in Blockform unter Ausfüllung der Hinterschneidungen, Einziehungen od.dgl. (14) der einzelnen Formkörper (13) befestigt ist,
dadurch gekennzeichnet,
daß zwischen dem Reibwerkstoffblock (16) und dem die Trägerplatte (10 aufgesinderten Halterungsbett (12) auf diesem ein nichtmetallischer dem Konturenverlauf des Rauhgrundes des Halterungsbettes (12) folgender Überzug (50), z.B. aus einem hochtemperaturbeständigen Kunststoff, als Korrosionsschutz für das Trägerblech (10) aufgebracht ist, wobei das Halterungsbett (12) aus einem Materialgemisch aus einem Anteil (A) mit niedrigem Schmelzpunkt und einem Anteil (B) aus einem höheren Schmelzpunkt vesteht.

3. Reibbelag nach Anspruch 1,
dadurch gekennzeichnet,
daß das Halterungsbett (12) aus einem Materialgemisch aus einem Anteil (A) mit niedrigerem Schmelzpunkt und einem Anteil (B) mit einem höheren Schmelzpunkt besteht.

4. Reibbelag nach einem der Ansprüche 1 bis 3,
dadurch gekennzeichnet,
daß der niedrig schmelzende Anteil (A) ein niedrig schmelzendes Metall wie Zinn od.dgl. oder eine niedrig schmelzende Legierung wie Bronze, Messing od.dgl. ist.

5. Reibbelag nach einem der Ansprüche 1 bis 3,
dadurch gekennzeichnet,
daß der höher schmelzende Anteil (B) aus Sand, Keramikpulver od.dgl. besteht.

6. Reibbelag nach einem der Ansprüche 1 bis 5,
dadurch gekennzeichnet,
daß der Schmelzpunkt des höher schmelzenden Anteils (B) unter dem Schmelzpunkt des Trägerblechs (10) liegt.

7. Reibbelag nach einem der Ansprüche 1 bis 6,
dadurch gekennzeichnet,
daß der niedrig schmelzende Anteil (A) aus etwa 30 % Bronze und der höher schmelzende Anteil (B) aus etwa 70 % Fe-Pulver besteht.

8. Reibbelag nach Anspruch 7,
dadurch gekennzeichnet,
daß die verwendete Bronze einen Anteil von 10 % Zinn aufweist.

9. Reibbelag nach einem der Ansprüche 1 bis 8,
dadurch gekennzeichnet,
daß das aufgesinterte Halterungsbett (12) aus einer das Trägerblech (10) im Bereich der Reibmaterialaufnahmefläche (11a) vollflächig oder teilflächig überdeckenden Grundschicht (12a) aus einzelnen, kraft- und formschlußbildenden Formelementen (13), die Hinterschneidungen, Einziehungen od.dgl. (14) aufweisen, besteht.

10. Reibbelag nach Anspruch 9,
dadurch gekennzeichnet,
daß auf der Grundschicht (12a) jeweils einen Abstand zueinander aufweisende Greifelemente (15; 115; 215) ausgebildet sind.

11. Reibbelag nach Anspruch 10,
dadurch gekennzeichnet,
daß jedes Greifelement (15) in Form einer zylindrischen Säule, kegelstumpfförmigen Säule oder als Kegelstumpf ausgebildet ist.

12. Reibbelag nach Anspruch 10,
dadurch gekennzeichnet,
daß jedes Greifelement (115) in Form einer Pyramide mit einer dreieckigen, viereckigen oder mehreckigen Grundfläche ausgebildet ist.

13. Reibbelag nach Anspruch 11 oder 12,
dadurch gekennzeichnet,
daß der Kegel- oder Pyramidenwinkel (α) zwischen der Grundfläche und einer Seite etwa 60 Grad beträgt.

14. Reibbelag nach einem der Ansprüche 1 bis 8,
dadurch gekennzeichnet,
daß das aufgesinterte Halterungsbett (12) als eine auf das Trägerblerh (10) im Bereich der Reibmaterialaufnahmefläche (11a) vollflächig oder teilflächig überdeckende Grundschicht (12a) und aus darauf ausgebildeten, gitterförmig angeordneten Reihen (17) mit Greifelementabschnitten (18) ausgebildet ist, wobei die Greifelementabschnitte (18) aus einzelnen Formelementen (13), die Hinterschneidungen, Einziehungen u.dgl. (14) aufweisen, besteht.

15. Reibbelag nach einem der Ansprüche 1 bis 14,
dadurch gekennzeichnet,
daß das Halterungsbett (12) neben dem Anteil (A) und dem Anteil (B) einen Anteil (C) aus Kohlenstoff aufweist.

16. Verfahren zur Herstellung eines Reibbelages unter Verwendung eines Trägerbleches (10) und durch Aufsinterung von zur Ausbildung eines Halterungsbettes (12) aus einzelnen, mit dem Reibwerkstoffblock (16) kraft- und formschlußbildenden Formkörpern (13) mit Hinterschneidungen, Einziehungen od.dgl. (14) als Rauhgrund geeigneten Werkstoffen,
dadurch gekennzeichnet,
daß vor dem Aufpressen des Reibwerkstoffes auf das Trägerblech (10) mit dem gesinterten Halterungsbett (12) auf dieses als Korrosionsschutz für das Trägerblech ein auf galvanischem Wege erzeugter metallischer Überzug (50) aus Kupfer, Silber, Zinn, Cadmium, Zink, Chrom oder einem anderen geeigneten Metall oder ein Überzug (50') aus einem hochtemperaturbeständigen Kunststoff aufgebracht wird.

17. Verfahren nach Anspruch 16,
dadurch gekennzeichnet, daß
a) ein pulverförmiges Gemisch aus einem Anteil (A) mit niedrigerem Schmelzpunkt und einem Anteil (B) mit höherem Schmelzpunkt erstellt wird, und
b1) das Pulver über ein Sieb oder über ein Lochblech gestrichen wird, das auf dem Trägerblech aufliegt, dann das Sieb abgehoben wird, so daß Pulverhäufchen des Gemisches dann auf dem Trägerblech verbleiben und anschließend die Sinterung vorgenommen wird, oder
b2) das Pulver in einer Graphitform mit einer Anzahl von Sacklochbohrungen, die sich konisch zur Sacklochöffnung erweitern, eingebracht wird, dann das Trägerblech auf die die Sacklochöffnungen aufweisende Seite der Graphitform aufgelegt wird und anschließend die Sinterung vorgenommen wird, oder
b3) das Pulver auf eine Formplatte aufgebracht wird, in die eine Anzahl von Nuten mit vorzugsweise dreieckförmigem Querschnitt eingelassen sind, wobei die Nuten in Quer- und Längsrichtung verlaufen und sich kreuzen, so daß das Gemischpulver auf das Trägerblech durch Aufstreichen im Wabenraster aufbringbar ist, dann das Trägerblech auf die die Nuten tragende Seite der Formplatte aufgelegt wird und anschließend die Sinterung vorgenommen wird.

## Claims

1. Disk brakes friction lining, especially for road vehicles and rail vehicles which are constructed in a single part or in multiple parts and which comprises a block (16) of a compressed friction material which is attached to a supporting plate (10) or supporting sheet metal, in which the supporting plate on the side which bears the friction material (16) possesses a sinter-fused mounting bed (12) made up of individual shaped elements (13) forming a frictional and form-fitting connection with the friction material provided with undercuts, recessed portions or suchlike (14) in the form of a rough base and, on the mounting bed (12), the pressed-on friction material is attached in the form of a block while filling the undercuts, recessed portions or the like (14) of the individual shaped elements (13),
characterized in that,
between the block of friction material (16) and the mounting bed (12) of the supporting plate (10) on the same, a metallic, galvanic coating (50) which follows the contours of the rough base of the mounting bed (12) is applied in the form of a corrosion protection for the supporting plate (10), the metallic coating (50) being comprised of copper, silver, tin, cadmium, zinc, chromium or of some other suitable metal.

2. Disk brakes friction lining, especially for road vehicles and rail vehicles, which is constructed in a single part or in multiple parts and which comprises a block (16) of a compressed friction material which is attached to a supporting plate (10) or supporting sheet metal, in which the supporting plate, on the side which bears the friction material (16), is provided with a sinter-fused mounting bed (12) made up of individual shaped elements (13) forming a africtional and form-fitting connection with the friction material provided with undercuts, recessed portions or the like (14) of the individual shaped elements (13),
characterized in that,
between the block of friction material (16) and the mounting bed (12) sinter-fused onto the supporting plate (10) on the same, a non-metallic coating (50) which follows the contours of the rough base of the mounting bed (12), e.g. of a plastic resistant to high temperatures, is applied in the form of a corrosion protection for the supporting plate (10), in which case the mounting bed (12) is comprised of a material mixture of a component (A) having a low melting point and of a component (B) having a higher melting point.

3. Disk brakes friction lining,
characterized in that
the mounting bed (12) is comprised of a material mixture of a component (A) having a lower melting point an of a component (B) having a higher melting point.

4. Disk brakes friction lining according to any of Claims 1 to 3,
characterized in that
the low-melting component (A) is a low-melting metal, such as tin or suchlike or a low-melting alloy such as bronze, brass or suchlike.

5. Disk brakes friction lining according to any of Claims 1 to 3.
characterized in that
the higher melting component (B) is comprised of sand, ceramic powder or suchlike.

6. Disk brakes friction lining according to any of Claims 1 to 5,
characterized in that
the melting point of the higher-melting component (B) lies below the melting point of the supporting plate (10).

7. Disk brakes friction lining according to any of Claims 1 to 6,
characterized in that
the low-melting component (A) is comprised of approximately 30% bronze and the higher-melting component (B) of 70% Fe powder.

8. Disk brakes friction lining according to Claim 7,
characterized in that
the bronze employed comprises a proportion of 10% tin.

9. Disk brakes friction lining according to any of Claims 1 to 8,
characterized in that
the sinter-fused mounting bed (12) is comprised of a basic layer (12a) covering the supporting plate (10) within the area of the friction material accommodation surface (11a) to its full extent or in part, while said basic layer (12a) is made up of individual shaped elements (13) forming a frictional and foam-fitting connection which are provided with undercuts, recessed portions or suchlike. (14).

10. Disk brakes friction lining according to Claim 9,
characterized in that,
on the basic layer (12a), in each case gripping elements (15;115;215) are constructed which are spaced apart from each other.

11. Disk brakes friction lining according to Claim 10,
characterized in that each gripping element (15) is constructed so as to possess the configuration of a cylindrical column, a frusto-conical column or of a truncated cone.

12. Disk brakes friction lining according to Claim 10,
characterized in that each gripping element (115) is constructed so as to possess the configuration of a pyramid having a triangular, square or polygonal base.

13. Disk braked friction lining according to Claims 11 or 12,
characterized in that
the cone or pyramid angle (α) between the base and one side is approximately 60°.

14. Disk brakes friction lining according to any of Claims 1 to 8,
characterized in that
the sinter-fused mounting bed (12) is constructed in the form of a basic layer (12a) which covers the supporting plate (10) in its entirety or in part within the area of the friction material accommodation surface (11a) and of rows (17) constructed thereupon and arranged in a lattice-like manner with gripping element sections (18), in which case the gripping element sections (18) are comprised of individual shaped elements (13) which are provided with undercuts, recessed portions or suchlike (14).

15. Disk brakes friction lining according to any of Claims 1 to 14,
characterized in that
the mounting bed (12), besides the component (A) and the component (B), comprises a component (C) of carbon.

16. Method for the manufacture of a disk brakes friction lining in which use is made of a supporting plate (10) and of sinter-fusing for the construction of a mounting bed (12) comprised of individual shaped elements (13) constituting a frictional and form-fitting connection with the friction material block (16) provided with undercuts, recessed portions or suchlike (14) in the form of materials suitable as a rough base,
characterized in that
prior to the friction material being pressed onto the supporting plate (10) with the sinter-fused mounting bed (12) onto the same in the form of a corrosion protection for the supporting sheet metal, a galvanically produced, metallic coating (50) of copper, silver, tin, cadmium, zinc, chromium or some other suitable material or a coating (50') of a plastic that is resistant to high temperatures is applied.

17. Process accoding to Claim 16,
characterized in that,
a) a powdery mixture of a component (A) possessing a low melting point and a component (B) possessing a higher melting point is produced, and in that
b1) the poweder is passed across a screen or across a perforated plate which rests upon the supporting plate, the screen then being raised so that small heaps of the mixture remain on the supporting plate and the sintering is subsequently carried out, or
b2) the poweder, in a graphite mold provided with a plurality of blind end bores which expand conically toward the blind end bore apertures, is inserted, the supporting plate then being placed upon the side of the graphite mold that is provided with the blind end bore apertures and the sintering being subsequently carried out, or
b3) the powder is applied to a pattern plate into which a plurality of grooves possessing by preference a triangular cross-section are sunk, in which case the grooves proceed in the transverse and longitudinal direction and intersect so that the mixture powder can be applied in a honeycomb raster pattern by being passed across, the supporting plate then being placed upon the side of the pattern plate which bears the grooves and the sintering is subsequently carried out.

## Revendications

1. Garniture de friction pour freins à disque, en particulier pour véhicules routiers et véhicules ferroviaires, qui est formée en une ou plusieurs parties et qui est constituée par un bloc (16) de matériau de friction pressé fixé sur une plaque de support (10) ou une tôle de support, la plaque de support présentant sur le côté qui porte le bloc de matériau de friction (16) un bâti de fixation rapporté par frittage (12) composé de corps moulés individuels (13) qui forment une jonction par adhérence et clabotée avec le bloc de friction avec des contre-dépouilles, des conicités ou équivalent (14) comme fond irrégulier et le matériau de friction pressé en forme de bloc étant fixé sur le bâti de fixation (12) en remplissant les contre-dépouilles, conicités ou équivalent (14) des différents corps moulés (13),
**caractérisée en ce**
qu'un revêtement (50) métallique galvanique qui suit les contours du support irrégulier du bâti de fixation (12) est appliqué comme protection contre la corrosion pour la plaque de support (10) entre le bloc de matériau de friction (16) et le bâti de fixation (12) de la plaque de support (10) sur celui-ci, le revêtement métallique (50) étant constitué par du cuivre, de l'argent, de l'étain, du cadmium, du zinc, du chrome ou un autre métal approprié.

2. Garniture de friction pour freins à disque, en particulier pour véhicules routiers et véhicules ferroviaires, qui est formée en une ou plusieurs parties et qui est constituée par un bloc (16) de matériau de friction pressé fixé sur une plaque de support (10) ou une tôle de support, la plaque de support présentant sur le côté qui porte le bloc de matériau de friction (16) un bâti de fixation rapporté par frittage (12) composé de corps moulés individuels (13) qui forment une jonction par adhérence et clabotée avec le bloc de friction avec des contre-dépouilles, des conicités ou équivalent (14) comme fond irrégulier et le matériau de friction en forme de bloc étant fixé sur le bâti de fixation (12) en remplissant les contre-dépouilles, conicités ou équivalent (14) des différents corps moulés (13),
**caractérisée en ce**
qu'un revêtement (50) non métallique qui suit les contours du fond irrégulier du bâti de fixation (12), par exemple en une matière plastique résistante aux températures élevées, est appliqué comme protection contre la corrosion pour la plaque de support (10) entre le bloc de matériau de friction (16) et le bâti de fixation (12) de la plaque de support (10) sur celui-ci, le bâti de fixation (12) étant composé d'un mélange de matériau composé d'une partie (A) avec un point de fusion bas et une partie (B) avec un point de fusion élevé.

3. Garniture de friction pour freins à disque,
**caractérisée en ce**
que le bâti de fixation (12) est composé d'un mélange de matériau composé d'une partie (A) avec un point de fusion plus bas et une partie (B) avec un point de fusion plus élevé.

4. Garniture de friction selon l'une des revendications 1 à 3,
**caractérisée en ce**
que la partie qui a le point de fusion bas (A) est un métal qui fond à basse température comme l'étain ou équivalent ou un alliage qui fond à basse température comme le bronze, le laiton ou équivalent.

5. Garniture de friction selon l'une des revendications 1 à 3,
**caractérisée en ce**
que la partie qui a le point de fusion plus élevé (B) se compose de sable, de poudre de céramique ou équivalent.

6. Garniture de friction selon l'une des revendications 1 à 5,
**caractérisée en ce**
que le point de fusion de la partie qui a le point de fusion plus élevé (B) se situe au-dessous du point de fusion de la tôle de support (10).

7. Garniture de friction selon l'une des revendications 1 à 6,
**caractérisée en ce**
que la partie au point de fusion bas (A) se compose d'environ 30 % de bronze et que la partie au point de fusion élevé (B) se compose d'environ 70 % de poudre de fer.

8. Garniture de friction selon la revendication 7,
**caractérisée en ce**
que le bronze utilisé présente un taux d'étain de 10 %.

9. Garniture de friction selon l'une des revendications 1 à 8,
**caractérisée en ce**
que le bâti de fixation rapporté par frittage (12) se compose d'une couche de base (12a) qui recouvre la tôle de support (10) dans la zone de la surface de logement du matériau de friction (11a) sur toute la surface ou sur une partie de la surface et qui se compose d'éléments moulés (13) individuels qui forment une jonction par adhérence et clabotée qui présentent des contre-dépouilles, conicités ou équivalent (14).

10. Garniture de friction selon la revendication 9,
**caractérisée en ce**
que des éléments de préhension (15 ; 115 ; 215) qui présentent respectivement un écart l'un par rapport à l'autre sont formés sur la couche de base (12a).

11. Garniture de friction selon la revendication 10,
**caractérisée en ce**
que chaque élément de préhension (15) est configuré en forme de colonne cylindrique, de colonne tronconique ou comme cône tronqué.

12. Garniture de friction selon la revendication 10,
**caractérisée en ce**
que chaque élément de préhension (115) est configuré en forme de pyramide avec une surface de base triangulaire, carrée ou polygonale.

13. Garniture de friction selon la revendication 11 ou 12,
**caractérisée en ce**
que l'angle au sommet du cône ou de la pyramide (a) entre la surface de base et un côté est d'environ 60 degrés.

14. Garniture de friction selon l'une des revendications 1 à 8,
**caractérisée en ce**
que le bâti de fixation rapporté par frittage (12) est configuré comme une couche de fond (12a) qui recouvre la tôle de support (10) dans la zone de la surface de logement du matériau de friction (11a) sur toute la surface ou sur une partie de la surface et se compose de rangées (17) placées en forme de grille configurées sur celle-ci avec des sections d'éléments de préhension (18), les sections d'éléments de préhension (18) étant composées d'éléments moulés individuels (13) qui présentent des contre-dépouilles, conicités et équivalent (14).

15. Garniture de friction selon l'une des revendications 1 à 14,
**caractérisée en ce**
que le bâti de fixation (12) présente, en plus de la partie (A) et de la partie (B) une partie (C) en carbone.

16. Procédé pour la fabrication d'une garniture de friction en utilisant une tôle de support (10) et par frittage d'éléments moulés (13) individuels, qui forment une jonction par adhérence et clabotée avec le bloc de matériau de friction (16) pour configurer un bâti de fixation (12), avec des contre-dépouilles, conicités ou équivalent (14) comme fond irrégulier en matériaux appropriés,
**caractérisé en ce**
qu'un revêtement métallique (50) de cuivre, argent, étain, cadmium, zinc, chrome ou un autre métal approprié, produit par voie galvanique, ou un revêtement (50') en une matière synthétique résistante aux températures élévées est appliqué avant le pressage du matériau de friction sur la tôle de support (10) avec le bâti de fixation rapporté par frittage (12) sur celui-ci comme protection anticorrosive pour la tôle de support.

17. Procédé selon la revendication 16,
**caractérisé en ce**
a) qu'un mélange sous forme de poudre est produit à partir d'une partie (A) avec un point de fusion plus bas et d'une partie (B) avec un point de fusion plus élevé et
b1) que la poudre passe par un tamis ou par une tôle perforée qui repose sur la tôle de support, que le tamis est ensuite enlevé si bien que des petits tas de poudre du mélange restent sur la tôle de support et que le frittage est effectué ensuite ou
b2) que la poudre est appliquée dans un moule de graphite avec un certain nombre de forures à trou borgne qui s'élargissent de manière conique vers l'orifice des trous borgnes, que la tôle de support est ensuite appliquée sur le côté du moule de graphite qui présente les orifices des trous borgnes et que le frittage est effectué ensuite ou
b3) que la poudre est appliquée sur une plaque moulée dans laquelle sont ménagées un certain nombre de rainures de section de préférence triangulaire, les rainures se situant dans le sens transversal et longitudinal et se croisant si bien que la poudre du mélange peut être appliquée sur la tôle de support dans un cadre alvéolé en raclant, que la tôle de support est ensuite posée sur le côté de la plaque moulée qui porte les rainures et que le frittage est effectué ensuite.
